# EUROPEAN PATENT APPLICATION

(11) **EP 4 116 258 A1**
(43) Date of publication of application: **11.01.2023**
(21) Application number: 21183984.0
(22) Date of filing: 06.07.2021
(51) Int. Cl.: C01C 1/04

(54) **SYSTEM FOR RECOVERING INERT GASES FROM AN AMMONIA SYNTHESIS LOOP AND METHOD THEREOF**

(71) Applicant: Yara International ASA, 0277 Oslo (NO)
(72) Inventor: Versteele, Wim, 9961 Boekhoute (BE); de Witte, Ivan, 04538-110 São Paulo (BR)
(74) Representative: De Clercq & Partners

(57) **Abstract**

The present disclosure relates to a method for separating inert gases, from ammonia gas in an ammonia production plant, and for using the inert gases as a component of a fuel, is disclosed. The method comprises the step of: a) adjusting the temperature of a first gas (1) comprising ammonia gas and the inert gases to a temperature equal to or lower than than -20 °C, thereby producing liquid ammonia (3) and an inert gas depleted in ammonia (4). The method is characterised in that it further comprises the steps of b) ejecting the inert gas stream produced in step a) to an inert gas station (8), using a gas stream from the ammonia production plant as the motive gas (6) in a gas ejector (5), thereby ejecting a gas stream at the outlet of the ejector; and c) using the gas stream (7) from the inert gas station, after its ejection in step b), as the component of a fuel. The present disclosure further relates to system for separating inert gases, comprising hydrogen gas, from ammonia gas in an ammonia production plant, and for subsequently using the inert gases as a component of a fuel, in which the method of the disclosure can be performed. The disclosure further relates to a method for revamping a system into the system of the disclosure. Finally, the disclosure relates to the use of the system of the disclosure for performing the method of the disclosure.

## Description

### Field

The present disclosure relates to the field of ammonia production, as well as to the fields of the separation and the recovery of inert gases from ammonia.

### Background

Ammonia is a compound of nitrogen and hydrogen with the formula NH3. A stable binary hydride, and the simplest nitrogen hydride, ammonia is a colorless gas with a characteristic pungent smell. It is a common nitrogenous waste, particularly among aquatic organisms, and it contributes significantly to the nutritional needs of terrestrial organisms by serving as a precursor to food and fertilizers. Ammonia, either directly or indirectly, is also a building block for the synthesis of many pharmaceutical products and is used in many commercial cleaning products. It is mainly collected by downward displacement of both air and water.
A typical modern ammonia-producing plant, in which a typical modern ammonia process is practiced, first converts natural gas (i.e., methane) or LPG (liquefied petroleum gases such as propane and butane) or petroleum naphtha into gaseous hydrogen. The method for producing hydrogen from hydrocarbons is known as steam reforming. The hydrogen is then combined with nitrogen to produce ammonia via the Haber-Bosch process. The synthesis of ammonia in the ammonia synthesis loop is achieved at a pressure as high as from 160 bar to 290 bar.

Due to the nature of the (typically multi-promoted magnetite) catalyst used in the ammonia synthesis reaction, only very low levels of oxygen-containing (especially CO, CO₂ and H₂O) compounds can be tolerated in the synthesis (hydrogen and nitrogen mixture) gas. Relatively pure nitrogen can be obtained by air separation, but additional oxygen removal may be required.

Because of relatively low single pass conversion rates (typically less than 20%), a large recycle stream is required. This can lead to the accumulation of inert nitrogen, N₂, and hydrogen, H₂, gases in the loop gas.

The desulfurisation unit, the primary and secondary reformers, the shift reactor, the CO₂ removal unit and the methanation unit form the *front end* of an ammonia production unit, whereas the ammonia synthesis loop forms the *back end* of an ammonia production unit.

The present disclosure is concerned with the handling of the recycling stream in the synthesis loop gas.

After sufficient recycling to the ammonia synthesis loop has been achieved to result in satisfactory ammonia production, a gas stream comprising inert gases, including hydrogen gas H₂, and gaseous ammonia can be discharged to the atmosphere. Alternatively, in some ammonia production plants comprising a so called *inert gas station,* the inert gases can be recovered. Once recovered, the stream comprising inert gases may be used as a source of fuel in combustion systems requiring such fuel. However, in order for the recovered gas stream comprising inert gases to be used as a fuel, it should be free of ammonia in order to avoid the production of NOₓ gases during the combustion process, through oxidation of ammonia.

Such separation of inert gases from ammonia by cooling of ammonia gas, leading to its condensation is well known.

### Prior Art

SU1066941A1 (1982) discloses a process comprising the absorption of inert impurities by liquid ammonia, the desorption of dissolved gases from liquid ammonia, and the return of the purified gas mixture to the ammonia production cycle. The process is characterised in that, the purified gas mixture is saturated in ammonia vapor.

US3553972 (American Messer Corp, 1968) discloses the recovery of ammonia and hydrogen-enriched gas from ammonia synthesis purge at high pressure, without the use of external refrigeration. The purge gas is cooled to nearly the dew point of ammonia to condense and thus separate ammonia from the purge gas. The refrigeration for condensing ammonia is produced by work-expanding the purge gas after ammonia condensate has been removed therefrom. Thereafter, the purge gas is further cooled so that gaseous impurities such as methane and argon are condensed and separated to leave a hydrogen-enriched gas suitable for recycling to the ammonia synthesis. The refrigeration for condensing the gaseous impurities is produced by work-expanding the product hydrogen-enriched gas.

EP0460001A1 (Norsk Hydro, 1989) relates to a process for the catalytic production of ammonia in which a gaseous mixture essentially consisting of unconverted synthesis gas, a certain amount of ammonia, inert gases and possibly also water is returned circulating in the synthesis reactor, after having been freed beforehand from the main part of the ammonia and possibly water by absorption. The gas mixture is placed in contact with a hygroscopic absorption agent comprising at least two OH groups for the absorption of ammonia and possibly also of water. The absorption is also carried out at a pressure substantially identical to the synthesis pressure of the ammonia and the ammonia is desorbed from the absorption agent at a lower pressure and at a higher temperature than during its absorption. At least part of the water possibly present is extracted from the absorption agent before being conveyed to the absorption column. Preferably, ethylene glycol, diethylene glycol or triethylene glycol, alone or in combination, is applied as an absorbing agent. Any water that may be present can be extracted from the absorption agent by means of an inert rectification gas before being re-routed through the absorption column.

The prior art, hence, provides solutions for separating ammonia from inert gases, such as to maximise the recovery of ammonia and as to limit the emissions of ammonia to the air, once a gas stream comprising inert gases and ammonia no longer is recycled to the synthesis loop. However, the prior art, to our knowledge, does not provide a solution for both separating the inert gases from ammonia and subsequently directing them to an inert gas station, from where they can be used as supply of fuel to combustion systems requiring such fuel.

The goal of this disclosure, therefore, is to provide a solution to efficiently direct a gas stream essentially free in ammonia and comprising inert gases to an inert gas station.

### Summary

In a first aspect of the disclosure, a method for separating inert gasesfrom ammonia gas in an ammonia production plant, and for subsequently using the inert gases as a component of a fuel, is disclosed. The method comprises the steps of:
a) adjusting the temperature of a first gas comprising ammonia gas and the inert gases to a temperature equal to or lower than -20 °C, thereby producing liquid ammonia and an inert gas depleted in ammonia;

The method is characterised in that it further comprises the steps of:
b) ejecting the inert gas produced in step a) to an inert gas station, using a gas stream from the ammonia production plant as the motive gas in a gas ejector, thereby ejecting a gas stream at the outlet of the ejector; and
c) using the gas stream from the inert gas station, after its ejection in step b), as the component of a fuel.

The inventors have now realised that this method is very valuable not only to purify inert gases from ammonia, but also to recover those inter gases at a suitable pressure in an inert gas station, for their subsequent use in a combustion process in which production of NOₓ emissions will remain within the regulatory levels of 90 to 200 mg/Nm³. The method of the disclosure, therefore, provides an alternative solution to de-NOx apparatuses with a high area footprint and that are costly.

In one embodiment according to the method of the disclosure, the method further comprises the step of:
d) further treating the gas stream ejected from the gas ejector to the inert gas station in step b), in a treatment unit, thereby obtaining an inert gas stream essentially free in ammonia.

In one embodiment according to the method of the disclosure, the inert gases comprise hydrogen, nitrogen, or a mixture thereof.

In one embodiment according to the method of the disclosure, the method further comprises the step of:
e) expanding a second gas in the ammonia production plant, such as to reduce the temperature of the gas, thereby producing an expanded gas, such as to reduce the temperature of the second gas, thereby producing an expanded gas, and adjusting the temperature in step a) is achieved by exchanging heat with the expanded gas produced from step e).

In one embodiment according to the method of the disclosure, the motive gas in step b) is part of the gas recycled to the ammonia synthesis loop of the ammonia production plant and has a pressure ranging from 150 to 160 bar.

In one embodiment according to the method of the disclosure, in step c), the inert gas stream is used as the component of a fuel in a primary reformer of an ammonia production plant.

In one aspect of the disclosure, a system for separating inert gases from ammonia gas in an ammonia production plant, and for subsequently using the inert gases as a component of a fuel, is disclosed. The system comprises:
- means for adjusting the temperature of a first gas comprising ammonia gas and inert gases to a temperature equal to or lower than -20 °C, having an inlet in fluid communication with a gas comprising ammonia gas and the inert gases, and an outlet for releasing an inert gas depleted in ammonia;

The system is characterised in that it further comprises:
- an inert gas station for recovering inert gases, having an inlet and an outlet;
- a gas ejector having a first inlet in fluid communication with the outlet of the means for cooling, a second inlet in fluid communication with a gas stream from the ammonia production plant having a pressure as the motive gas, and an outlet in fluid communication with the inlet of the inert gas station; and
- a unit operating through the consumption of a fuel, having an inlet for the fuel in fluid communication with the outlet of the inert gas station, and an outlet.

In one embodiment according to the system of the disclosure, the system further comprises a treatment unit for an inert gas stream, for obtaining an inert gas stream essentially free in ammonia having an inlet in fluid communication with the outlet of the inert gas station, and an outlet in fluid communication with the inlet for the fuel of the unit operating through the consumption of a fuel.

In one embodiment according to the system of the disclosure, the means for cooling is a heat exchanger, and the system further comprises a gas expander for expanding a second gas in the ammonia production plant, such as to reduce the temperature of the gas, thereby producing an expanded gas, such that the expanded gas is the cooling medium in the heat exchanger.

In one embodiment according to the system of the disclosure, the second inlet of the gas ejector is in step b) is in fluid communication with the gas recycled to the ammonia synthesis loop of the ammonia production plant..

In one embodiment according to the system of the disclosure, the unit operating through the consumption of a fuel is a primary reformer of an ammonia production plant.

In one aspect of the disclosure, a method for revamping a system comprising:
- means for adjusting the temperature of a gas comprising ammonia gas and inert gases comprising hydrogen gas, to a temperature equal to or lower than -20 °C, having an inlet in fluid communication with a gas comprising ammonia gas and inert gases and an outlet for releasing an inert gas depleted in ammonia; and
- an inert gas station for recovering inert gases, having an inlet and an outlet;
- a unit operating through the consumption of a fuel, having an inlet for the fuel in fluid communication with the outlet of the inert gas station, and an outlet; and
- optionally, a treatment unit for an inert gas stream for obtaining an inert gas stream essentially free in ammonia, having an inlet in fluid communication with the outlet of the inert gas station, and an outlet in fluid communication with the inlet for the fuel of the unit operating through the consumption of a fuel; into a system according to the system of the disclosure, is disclosed. The method comprises the steps of:

a') introducing in the system a gas ejector having a first inlet, a second inlet and an outlet; and
b') fluidly connecting the first inlet of the gas ejector with the outlet of the means for adjusting the temperature;
c') fluidly connecting the second outlet of the gas ejector with a gas stream from the ammonia production plant; and
d') fluidly connecting the outlet of the gas ejector with the inlet of the inert gas station.

In one embodiment according to the method for revamping of the disclosure, in step c'), the second inlet of the gas ejector is fluidly connected to the gas recycled to the ammonia synthesis loop of the ammonia production plant having a pressure ranging from 150 to 160 bar.

In one aspect of the disclosure, the use of the system of the disclosure for performing the method of the disclosure is disclosed.

In one aspect of the disclosure, the use of a gas ejector (5) in an ammonia production plant, for recovering inert gases, is disclosed.

### List of figures

- **Figure 1:**: schematic representation of a system according to the system of the disclosure
- **Figure 2:**: schematic representation of a conventional gas ejector
- **Figure 3:**: schematic representation of an ammonia production system

**List of numerals**

| | |
|---|---|
| **1** | gas comprising ammonia gas and inert gases |
| **2** | means for adjusting the temperature |
| **3** | liquid ammonia |
| **4** | inert gas stream depleted in ammonia |
| **5** | gas ejector |
| **6** | motive gas |
| **7** | inert gas stream ejected by the gas ejector |
| **8** | inert gas station |
| **9** | treatment unit for an inert gas stream |
| **10** | inert gas stream |
| **11** | unit operating through the consumption of a fuel |
| **12** | inlet of the means for cooling |
| **13** | outlet of the means for cooling |
| **14** | inlet of inert gas station |
| **15** | outlet of inert gas station |
| **16** | first inlet of the gas ejector |
| **17** | second inlet of the gas ejector |
| **18** | outlet of the gas ejector |
| **20** | outlet of the unit operating through the consumption of a fuel |
| **21** | inlet of the treatment unit for an inert gas stream |
| **22** | outlet of the treatment unit for an inert gas stream |
| **24** | shift conversion unit |
| **25** | inlet of shift conversion unit |
| **26** | outlet of shift conversion unit |
| **27** | gas mixture of carbon dioxide and hydrogen |
| **28** | carbon dioxide removal unit |
| **29** | inlet of carbon dioxide removal unit |
| **30** | outlet for carbon dioxide removal unit |
| **31** | hydrogen |
| **32** | methanation unit |
| **33** | inlet for methanation unit |
| **34** | outlet for methanation unit |
| **35** | hydrogen gas essentially free in carbon monoxide and carbon dioxide |
| **36** | ammonia synthesis loop |
| **37** | inlet of ammonia synthesis unit |
| **38** | flue gas to stack of steam reformer |
| **39** | ammonia production system |
| **40** | fuel |
| **41** | heating unit |
| **42** | heated natural gas/steam mixture |
| **43** | inlet of heating unit |
| **44** | outlet of heating unit |
| **45** | ammonia |
| **48** | water |
| **49** | nitrogen gas |
| **50** | tube section of steam reformer |
| **51** | fuel section of steam reformer |
| **52** | stack of steam reformer |
| **53** | secondary reformer |
| **54** | air |
| **100** | first inlet for a high-pressure gas in a conventional gas ejector |
| **200** | second inlet for a low-pressure gas in a conventional gas ejector |
| **300** | outlet in conventional ejector |
| **400** | conventional gas ejector |
| **500** | heated feed of natural gas |
| **600** | sulfur removal unit |
| **700** | inlet of sulfur removal unit |
| **800** | outlet of sulfur removal unit |
| **900** | sulfur-depleted natural gas |
| **1000** | steaming unit |
| **1100** | inlet of steaming unit |
| **1200** | outlet of steaming unit |
| **1300** | natural gas/steam mixture |
| **1900** | steam reformer |
| **2000** | inlet for natural gas of steam reformer |
| **2100** | outlet for flue gas from steam reformer |
| **2200** | reformed gas |
| **2300** | feed of natural gas |
| **2400** | flue gas |

### Description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawings), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawings), or to any novel one, or any novel combination, of the steps of any method or process so disclosed.

The enumeration of numeric values by means of ranges of figures comprises all values and fractions in these ranges, as well as the cited end points. The term "ranges from ... to ..." as used when referring to a range for a measurable value, such as a parameter, an amount, a time period, and the like, is intended to include the limits associated to the range that is disclosed.

As defined herein, inert gases are helium gas, argon gas, methane gas, nitrogen gas (N₂), and hydrogen gas (H₂), which do not produce NOₓ gases upon oxidation. As defined herein, NOₓ gases are

As defined herein, a fuel is a chemical component which, upon combustion, provides energy value, for example in the form of heat release.

As defined herein, a gas encompasses mixtures of gases, the mixed gases forming also a gas.

### Method for separating and recycling inert gases to an inert gas station

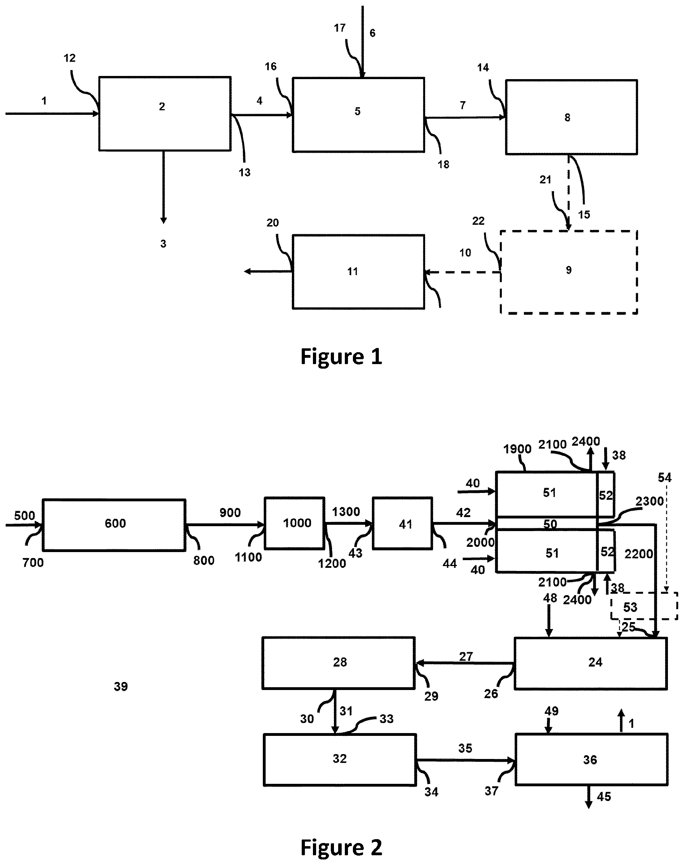

Reference is made to Figures 1. In a first aspect of the disclosure, a method for separating inert gases, comprising hydrogen gas, from ammonia gas in an ammonia production plant, and for using the inert gases as a component of a fuel, is disclosed. The method comprises the step of a) adjusting the temperature of a first gas **1** comprising ammonia gas and the inert gases to a temperature equal to or lower than -20 °C, thereby producing liquid ammonia **3** and an inert gas depleted in ammonia **4;**

The method is characterised in that it further comprises the steps of b) ejecting the inert gas **4** produced in step a) to an inert gas station **8,** using a gas stream from the ammonia production plant as the motive gas **6** in a gas ejector **5,** thereby ejecting a gas stream at the outlet of the ejector **5;** and c) using the gas stream **7** from the inert gas station **(8),** after its ejection in step b), as the component of a fuel.

The inventors have now realised that this is possible not only to purify inert gases from ammonia: since the use of those gases in a combustion process will not result in the production of NOₓ emissions above the regulatory levels of 90 to 200 mg/Nm³, a solution to recover those gases at a suitable pressure, in particular at a pressure ranging from 30 to 40 bar, in an inert gas station, is very valuable. Instead of being wasted to the ambient air at the end of the recycling process to the ammonia synthesis loop, the purified inert gases can be used as a fuel. The method of the disclosure, therefore, provides an alternative solution to de-NOx apparatuses with a high area footprint and that are costly.

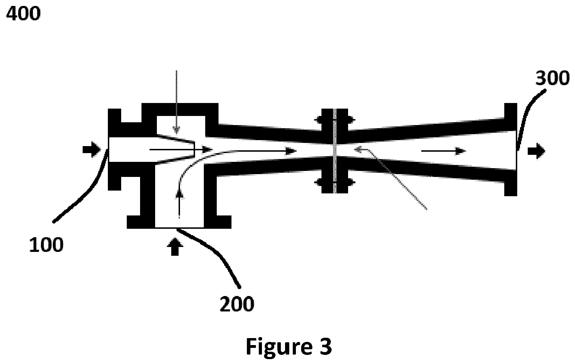

Reference is made to Figure 3. In order to achieve the recovery of the purified inert gases at a pressure ranging from 30 to 40 bar, a conventional gas ejector **400** can be used. As defined herein, a conventional gas ejector **400** device comprises a first inlet for a high-pressure gas **100,** called the motive gas, and a second inlet for a low-pressure gas **200** that is to be drawn into the device where it is mixed with the motive gas. The resulting gas mixture is expelled at the outlet **300** at a pressure between the high-pressure of the motive gas and the low-pressure of the inlet gas. The expelled gas can be expelled into the open air, or can be transported through a conduit to a further location downstream the gas ejector device. Reference is made to Figure 1: in the case of the present disclosure, the expelled gas **7** is transported to the inert gas station **8.**

Reference is made to Figure 1. In particular, the inert gas **4** has a pressure ranging from 10 to 15 bar, the gas stream **7** ejected in step b) to has a pressure ranging from 30 to 40 bar, and the motive gas **6** has a pressure ranging from 150 to 290 bar is required.

Reference is made to Figure 1. In one embodiment according to the method of the disclosure, the method further comprises the step of d) further treating the gas stream **7** ejected from the gas ejector **5** to the inert gas station **8** in step b), in a treatment unit **9,** thereby obtaining an inert gas stream essentially free in ammonia **10.**

When such step d) is performed, upon using the stream **7** in a combustion process, a level of NOₓ emissions as low as 90 mg/Nm³ can be achieved in the process in which the fuel is consumed.

In one embodiment according to the method of the disclosure, the inert gases comprise nitrogen, hydrogen, or a mixture thereof.

In one embodiment according to the method of the disclosure, the method further comprises the step of e) expanding a second gas in the ammonia production plant, such as to reduce the temperature of the gas, thereby producing an expanded gas; and adjusting in step a) is achieved by exchanging heat with the expanded gas produced from step e). In particular, the second gas has a pressure ranging from 3 to 4 bar and the expanded gas has a pressure ranging from 0.1 to 0.2 bar. This method for achieving step a) is very suitable to the method of the disclosure. Indeed, in step a) a gas comprising ammonia gas and inert gases **1** is cooled. This gas is generated from the ammonia production plant. The ammonia production plant does comprise, as detailed in the background, number of gases. Number of those gases in the ammonia plant are, in turn, pressurised and can be depressurised for being further processed in the ammonia plant. When a gas is depressurised, its temperature decreases, which means that it can act as a cooling agent. It is therefore practical to cool in the ammonia plant process by expanding a gas that can be used in the cooling process. As the gas to be cooled in step is generated from the ammonia production plant, it is particularly suitable to perform step a) using a cooling agent obtained from the expansion of another gas in the ammonia production plant: the equipment relevant to the heat exchange process can easily be integrated in the ammonia production plant.

Reference is made to Figures 1 and 2. In one embodiment according to the method of the disclosure, the motive gas **6** in step b) is part of the gas recycled to the ammonia synthesis loop of the ammonia production plant. The pressure range associated to this gas is 150 to 160 bar, which allows for ejecting the gas 7 at a pressure of 30 to 40 bar, while limiting the energy requirements associated to the motive gas. In addition, such use of the gas recycled to the ammonia synthesis loop as the motive gas **6** allows for additional inert gases to be recovered in the inert gas station **8,** as the gas recycled to the ammonia synthesis loop comprises inert gases, in particular hydrogen.

Reference is made to Figure 2. In one embodiment according to the method of the disclosure, in step c), the inert gas stream is used as a component of a fuel in a primary reformer **19** of an ammonia production plant.

### System for separating and recycling inert gases to an inert gas station

Reference is made to Figure 1. In one aspect of the disclosure, a system for separating inert gases from ammonia gas in an ammonia production plant, and for subsequently using the inert gases as a component of a fuel, is disclosed. The system comprises means for adjusting the temperature **2** of a first gas **1** comprising ammonia gas and inert gases to a temperature equal to or lower than -20 °C, having an inlet **12** in fluid communication with a gas **1** comprising ammonia gas and the inert gases, and an outlet **13** for releasing an inert gas depleted in ammonia **4.**

The system is characterised in that it further comprises an inert gas station **8** for recovering inert gases, having an inlet **14** and an outlet **15;** a gas ejector **5** having a first inlet **16** in fluid communication with the outlet **13** of the means for cooling **2,** a second inlet **17** in fluid communication with a gas stream from the ammonia production plant as the motive gas **6,** and an outlet **18** in fluid communication with the inlet **14** of the inert gas station **8;** and a unit operating through the consumption of a fuel **11,** having an inlet **19** for the fuel in fluid communication with the outlet **15** of the inert gas station **8,** and an outlet **20.**

As defined herein, means for adjusting the temperature is any equipment suitable for decreasing the temperature of a gas mixture, such as, but not limited to a heat exchanger or a refrigerator.

The inventors have now realised that this is possible not only to purify inert gases from ammonia: since the use of those gases in a combustion process will not result in the production of NOₓ emissions above the regulatory levels of 90 to 200 mg , a solution to recover those gases at a suitable pressure, in particular at a pressure ranging from 30 to 40 bar, in an inert gas station, is very valuable. Instead of being wasted to the ambient air at the end of the recycling process to the ammonia synthesis loop, the purified inert gases can be used as a fuel. The system of the disclosure, therefore, provides an alternative solution to de-NOx apparatuses with a high area footprint and that are costly.

Reference is made to Figure 3. A conventional gas ejector **400** can be used. As defined herein, a conventional gas ejector **400** device comprises a first inlet for a high-pressure gas **100,** called the motive gas, and a second inlet for a low-pressure gas **200** that is to be drawn into the device where it is mixed with the motive gas. The resulting gas mixture is expelled at the outlet **300** at a pressure between the high-pressure of the motive gas and the low-pressure of the inlet gas. The expelled gas can be expelled into the open air, or can be transported through a conduit to a further location downstream the gas ejector device. Reference is made to Figure 1: in the case of the present disclosure, the expelled gas **7** is transported to the inert gas station **8.**

Reference is made to Figure 1. In particular, the inert gas **4** has a pressure ranging from 10 to 15 bar, the gas stream **7** ejected in step b) has a pressure ranging from 30 to 40 bar, and the motive gas **6** has a pressure ranging from 150 to 290 bar is required.

Reference is made to Figure 1. In one embodiment according to the system of the disclosure, the system further comprises a treatment unit **9** for an inert gas stream **7,** for obtaining an inert gas stream essentially free in ammonia **10** having an inlet **21** in fluid communication with the outlet **15** of the inert gas station **8,** and an outlet **22** in fluid communication with the inlet **19** for the fuel of the unit operating through the consumption of a fuel **11.**

In the presence of such treatment unit **9,** upon using the stream **7** in a combustion process, a level of NOₓ emissions as low as 90 mg/Nm³ can be achieved in the process in which the fuel is consumed.

In one embodiment according to the system of the disclosure, the means for adjusting the temperature **2** is a heat exchanger, and wherein the system further comprises a gas expander for expanding a second gas in the ammonia production plant, such that the expanded gas is the cooling medium in the heat exchanger. In particular, the second gas has a pressure ranging from 3 to 4 bar and the expanded gas has a pressure ranging from 0.1 to 0.2 bar.

Such means for adjusting the temperature **2** are very suitable to the system of the disclosure. Indeed, in step a) a gas mixture comprising ammonia gas and inert gases **1** is cooled. This gas is generated from the ammonia production plant. The ammonia plant process does comprise, as detailed in the background, number of gases. Number of those gases in the ammonia plant are, in turn, pressurised and can be depressurised for being further processed in the ammonia plant. When a gas is depressurised, its temperature decreases, which means that it can act as a cooling agent. It is therefore practical to cool in the ammonia production plant by expanding a gas that can be used in the cooling process. As the gas to be cooled in step is generated from the ammonia production plant, it is particularly suitable to obtain a cooling agent by expanding another gas in the ammonia production plant in a gas expander. The gas to be cooled and the cooling agent can then easily exchange heat in a heat exchanger. Overall, the equipment relevant to the heat exchange process can easily be integrated in the ammonia production plant.

Reference is made to Figures 1 and 2. In one embodiment according to the system of the disclosure, the second inlet **17** of the gas ejector **5** is in step b) is in fluid communication with the gas recycled to the ammonia synthesis loop of the ammonia production plant **6.** The corresponding flow and pressure range associated to this gas is 150 to 160 bar, which allows for ejecting the gas **7** at a pressure of 30 to 40 bar, while limiting the energy requirements associated to the motive gas. In addition, such use of the gas recycled to the ammonia synthesis loop as the motive gas **6** allows for additional inert gases to be recovered in the inert gas station **8,** as the gas recycled to the ammonia synthesis loop comprises inert gases, in particular hydrogen.

Reference is made to Figure 3. In one embodiment according to the system of the disclosure, the unit operating through the consumption of a fuel **11** is a primary reformer **19** of an ammonia production plant.

### Method for revamping

Reference is made to Figure 1. In one aspect of the disclosure, a method for revamping a system comprising means for means for adjusting the temperature **2** of a gas comprising ammonia gas and inert gases **1** comprising hydrogen gas, to a temperature no higher than -20 °C, having an inlet **12** in fluid communication with a gas comprising ammonia gas and inert gases **1** and an outlet **13** for releasing an inert gas depleted in ammonia **4;** and an inert gas station **8** for recovering inert gases, having an inlet **14** and an outlet **15;** a unit operating through the consumption of a fuel 11, having an inlet **19** for the fuel in fluid communication with the outlet **15** of the inert gas station **8,** and an outlet **20;** and, optionally, a treatment unit for an inert gas stream **9** for obtaining an inert gas stream essentially free in ammonia **10,** having an inlet **21** in fluid communication with the outlet **15** of the inert gas station **8** and an outlet **22** in fluid communication with the inlet **19** for the fuel of the unit operating through the consumption of a fuel **11;** into a system according to the system of the disclosure, is disclosed. The method comprises the steps of a') introducing in the system a gas ejector **5** having a first inlet **16,** a second inlet **17** and an outlet **18;** and b') fluidly connecting the first inlet **16** of the gas ejector **5** with the outlet **13** of the means for adjusting the temperature **2;** c') fluidly connecting the second outlet **17** of the gas ejector **5** with a gas stream **6** from the ammonia production plant; and d') fluidly connecting the outlet **18** of the gas ejector **5** with the inlet **14** of the inert gas station **8.**

Hence, all that is required in order to revamp a conventional ammonia production system is to insert a gas ejector by introducing only three simple fluid connections:
1. the fluid connection joining the first inlet **16** of the gas ejector **5** with the outlet **13** of the means for adjusting the temperature **2;**
2. the fluid connection joining the second outlet **17** of the gas ejector **5** with a gas stream **6** from the ammonia production plant having a pressure ranging from 150 to 290 bar; and
3. the fluid connection joining the outlet **18** of the gas ejector **5** with the inlet **14** of the inert gas station **8.**

In one embodiment according to the method for revamping of the disclosure, in step c'), the second inlet **17** of the gas ejector **5** is fluidly connected to the gas **6** recycled to the ammonia synthesis loop of the ammonia production plant. The corresponding flow and pressure range associated to this gas is 150 to 160 bar, which allows for ejecting the gas **7** at a pressure ranging from 30 to 40 bar, while limiting the energy requirements associated to the motive gas.

### Use of the system of the disclosure

In one aspect of the disclosure, the use of the system according to the disclosure for performing the method according to the disclosure, is disclosed.

### Use of of a gas ejector in an ammonia production plant

In one aspect of the disclosure, the use of a gas ejector **(5)** in an ammonia production plant, for recovering inert gases, is disclosed.

### Example

Reference is made to Figure 2. The feed of natural gas **500** was treated in the sulfur removal unit **600** and subsequently mixed with steam in the steaming unit **1000** and heated in the heating unit **41** to a temperature of 590 °C, prior to being reacted in the tube section **50** of the steam methane reformer **1900,** into carbon monoxide and hydrogen, comprised in the reformed gas **2200.** The fuel gas in the furnace chamber **51** was the fuel **40.** The reformed gas **2200** produced from the steam reformer **1900** then was reacted in a secondary reformer **53,** in order to produce additional carbon monoxide and hydrogen. The reformed gas **2200** was consecutively treated in the shift conversion unit **24,** producing a mixture of carbon monoxide and hydrogen **27,** in the carbon dioxide removal unit **28,** producing the hydrogen gas flow **31,** in the methanation unit **32,** producing the hydrogen gas stream **35,** essentially free in carbon monoxide and carbon dioxide, and in the ammonia synthesis unit **36,** thereby producing ammonia **45** and a gas mixture comprising ammonia gas and inert gases **1.**

Reference is made to Figure 1. The gas mixture comprising ammonia gas and inert gases **1** comprising hydrogen gas H₂, was cooled to a temperature of - 20 °C, thereby producing liquid ammonia **3** and an inert gas stream **4** comprising hydrogen gas H₂ and depleted in ammonia. The cooling in the unit **2** was achieved through a heat exchanger in which a gas, expanded from 3.6 bar to 0.16 bar, served as the cooling agent.

Reference is made to Figures 1 and 3. The inert gas stream **4 (200)** then was ejected to the inert gas station **8,** using a gas ejector **5 (400)** and a gas stream from the ammonia production plant having a pressure of 155 bar as the motive gas **6 (100).** A gas stream **7 (300)** was ejected from the gas ejector **5 (400),** at a pressure of 35 bar suitable for being recovered in the inert gas station **8.**

Reference is made to Figures 1 and 2. The gas stream **7** recovered in the inert gas station **8** then was directed to the primary reformer **1900** as a source of fuel. The unit operating through the consumption of a fuel **11** was, in this case, the primary reformer **1900.** 90 mg/Nm³ of NOₓ gases were emitted from the primary reformer **1900.**

## Claims

1. A method for separating inert gases from ammonia gas in an ammonia production plant, and for subsequently using the inert gases as a component of a fuel, comprising the steps of:
a) adjusting the temperature of a first gas **(1)** comprising ammonia gas and the inert gases to a temperature equal to or lower than -20 °C, thereby producing liquid ammonia **(3)** and an inert gas depleted in ammonia **(4);**
**characterised in that** the method further comprises the steps of:
b) ejecting the inert gas **(4)** produced in step a) to an inert gas station **(8),** using a gas stream from the ammonia production plant as the motive gas **(6)** in a gas ejector **(5),** thereby ejecting a gas stream **(7)** at the outlet of the ejector (5); and
c) using the gas stream **(7)** from the inert gas station **(8),** after its ejection in step b), as a component of a fuel.

2. The method according to claim 1, further comprising the step of:
d) further treating the gas stream **(7)** ejected from the gas ejector (5) to the inert gas station **(8)** in step b), in a treatment unit **(9),** thereby obtaining an inert gas stream essentially free in ammonia (10).

3. The method according to any one of claims 1 to 2, wherein the inert gases in the gases (1), (4) and (7) comprise hydrogen, nitrogen, or a mixture thereof.

4. The method according to any one of claims 1 to 3, further comprising the step of:
e) expanding a second gas in the ammonia production plant, such as to reduce the temperature of the gas, thereby producing an expanded gas, wherein adjusting the temperature in step a) is achieved by exchanging heat with the expanded gas produced from step e).

5. The method according to any one of claims 1 to 4, wherein the motive gas **(6)** in step b) is part of the gas recycled to the ammonia synthesis loop of the ammonia production plant, having a pressure ranging from 150 bar to 160 bar.

6. The method according to any one of claims 1 to 5, wherein, in step c), the inert gas stream is used as a component of a fuel in a primary reformer **(19)** of an ammonia production plant.

7. A system for separating inert gases from ammonia gas in an ammonia production plant, and for subsequently using the inert gases as a component of a fuel, comprising:
• means for adjusting the temperature **(2)** of a first gas **(1)** comprising ammonia gas and inert gases to a temperature equal to or lower -20 °C, having an inlet **(12)** in fluid communication with a gas comprising ammonia gas and inert gases **(1)** and an outlet **(13)** for releasing an inert gas depleted in ammonia **(4);**
**characterised in that** the system further comprises:
• an inert gas station **(8)** for recovering inert gases, having an inlet **(14)** and an outlet **(15);**
• a gas ejector **(5)** having a first inlet **(16)** in fluid communication with the outlet **(13)** of the means for cooling **(2),** a second inlet **(17)** in fluid communication with a gas stream from the ammonia production plant as the motive gas **(6),** and an outlet **(18)** in fluid communication with the inlet **(14)** of the inert gas station **(8);** and
• a unit operating through the consumption of a fuel **(11),** having an inlet **(19)** for the fuel in fluid communication with the outlet **(15)** of the inert gas station **(8),** and an outlet **(20).**

8. The system according to claim 7, further comprising a treatment unit **(9)** for an inert gas stream **(7),** for obtaining an inert gas stream essentially free in ammonia **(10)** having an inlet **(21)** in fluid communication with the outlet **(15)** of the inert gas station **(8),** and an outlet **(22)** in fluid communication with the inlet **(19)** for the fuel of the unit operating through the consumption of a fuel **(11).**

9. The system according to any one of claims 7 to 8, wherein the means for cooling **(2)** is a heat exchanger, and wherein the system further comprises a gas expander for expanding a second gas in the ammonia production plant, such as to reduce the temperature of the gas, thereby producing an expanded gas, such that the expanded gas is the cooling medium in the heat exchanger.

10. The system according to any one of claims 7 to 9, wherein the second inlet **(17)** of the gas ejector **(5)** is in step b) is in fluid communication with the gas recycled to the ammonia synthesis loop **(6)** of the ammonia production plant, having a pressure ranging from 150 bar to 160 bar.

11. The system according to any one of claims 7 to 10, wherein, the unit operating through the consumption of a fuel **(11)** is a primary reformer of an ammonia production plant.

12. A method for revamping a system comprising:
• means for adjusting the temperature **(2)** of a gas comprising ammonia gas and inert gases **(1)** comprising hydrogen gas, to a temperature equal to or lower than -20 °C, having an inlet **(12)** in fluid communication with a gas comprising ammonia gas and inert gases **(1)** and an outlet **(13)** for releasing an inert gas depleted in ammonia **(4);** and
• an inert gas station **(8)** for recovering inert gases, having an inlet **(14)** and an outlet **(15);**
• a unit operating through the consumption of a fuel **(11),** having an inlet **(19)** for the fuel in fluid communication with the outlet **(15)** of the inert gas station **(8),** and an outlet **(20);** and
• optionally, a treatment unit for an inert gas stream **(9)** for obtaining an inert gas stream essentially free in ammonia **(10),** having an inlet **(21)** in fluid communication with the outlet **(15)** of the inert gas station **(8),** and an outlet **(22)** in fluid communication with the inlet **(19)** for the fuel of the unit operating through the consumption of a fuel **(11);**
into a system according to any one of claims 7 to 11, comprising the steps of:
a') introducing in the system a gas ejector **(5)** having a first inlet **(16),** a second inlet **(17)** and an outlet **(18);** and
b') fluidly connecting the first inlet **(16)** of the gas ejector **(5)** with the outlet **(13)** of the means for adjusting the temperature **(2);**
c') fluidly connecting the second outlet **(17)** of the gas ejector **(5)** with a gas stream **(6)** from the ammonia production plant; and
d') fluidly connecting the outlet **(18)** of the gas ejector **(5)** with the inlet **(14)** of the inert gas station **(8).**

13. The method according to claim 12, wherein, in step c'), the second inlet **(17)** of the gas ejector **(5)** is fluidly connected to the gas recycled to the ammonia synthesis loop **(6)** of the ammonia production plant, having a pressure ranging from 150 bar to 160 bar.

14. Use of the system according to any one of claims 7 to 11 for performing the method according to any one of claims 1 to 6.

15. Use of a gas ejector (5) in an ammonia production plant, for recovering inert gases.
